Europäisches Patentamt

European Patent Office

Office européen des brevets

(19)

(11) Numéro de publication : **0 382 596 B1**

(12)

# FASCICULE DE BREVET EUROPEEN

(45) Date de publication du fascicule du brevet :
**17.06.92 Bulletin 92/25**

(51) Int. Cl.⁵ : **F02B 27/02**

(21) Numéro de dépôt : **90400234.2**

(22) Date de dépôt : **26.01.90**

(54) **Dispositif d'admission pour moteur à combustion interne.**

(30) Priorité : **09.02.89 FR 8901712**

(43) Date de publication de la demande :
**16.08.90 Bulletin 90/33**

(45) Mention de la délivrance du brevet :
**17.06.92 Bulletin 92/25**

(84) Etats contractants désignés :
**DE GB IT**

(56) Documents cités :
**FR-A- 2 551 801
FR-A- 2 577 646
PATENT ABSTRACTS OF JAPAN vol. 9, no.
117 (M-381)(1840) 22 mai 1985, & JP-A-60 3426**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Schwab, Luc
17, Avenue de Coutainville
F-92700 Colombes (FR)**

(74) Mandataire : **Kohn, Philippe et al
c/o CABINET LAVOIX 2, place d'Estienne
d'Orves
F-75441 Paris Cédex 09 (FR)**

EP 0 382 596 B1

Jouve, 18, rue Saint-Denis, 75001 PARIS

## Description

La présente invention est relative à un dispositif d'admission pour un moteur à combustion interne du type comportant un boîtier de répartition auquel sont raccordés un tube d'entrée et au moins une paire de conduits tubulaires d'aspiration qui se rejoignent en un raccord en Y pour alimenter un tuyau d'admission relié à un cylindre du moteur, et des moyens d'obturation commandés d'au moins un des deux conduits d'aspiration.

Différents dispositifs d'admission de ce type ont déjà été proposés et l'un d'eux est notamment décrit et représenté dans le brevet français FR-A-2 577 646.

Du fait de leur conception, ces dispositifs qui s'appliquent notamment aux moteurs à plusieurs cylindres équipant les véhicules automobiles modernes, ont pour inconvénients de s'adapter avec difficultés dans les compartiments moteurs des véhicules qui sont de dimensions de plus en plus réduites, et également d'être peu esthétiques. De plus, du fait de cet encombrement, le boîtier de répartition est en général d'un volume réduit et ne permet pas d'assurer une bonne efficacité sur le plan de l'accord acoustique entre les différents tubes et conduits.

Afin de remédier à ces inconvénients, l'invention propose un dispositif d'admission du type mentionné plus haut caractérisé en ce que les conduits d'aspiration et leur raccord s'étendent entièrement dans le boîtier duquel le tuyau d'admission fait saillie vers l'extérieur à travers la paroi en direction du cylindre et dans lequel sont agencés les organes mobiles d'obturation et au moins une partie de leurs moyens de commande.

Selon d'autres caractéristiques de l'invention :
– la paire de conduits tubulaires d'aspiration comprend un conduit long et un conduit court, les organes mobiles d'obturation comportant un volet mobile d'obturation monté pivotant autour d'un axe de rotation dans le conduit court ;
– les moyens de commande agencés dans le boîtier de répartition comportent un actionneur à dépression dont la cloison mobile formant piston est reliée au moyen d'une tringlerie à l'axe de rotation du volet, la chambre de commande de l'actionneur étant reliée à une source de dépression au moyen d'une conduite qui traverse la paroi du boîtier ;
– le volet mobile possède une section sensiblement égale à celle de la portion du conduit court dans laquelle il est monté pivotant autour d'un axe de rotation, sensiblement perpendiculaire à l'axe de cette portion, et qui fait saillie hors du conduit pour être relié à la tringlerie de commande ;
– la tringlerie de commande comporte un bras qui s'étend perpendiculairement à l'axe du volet auquel il est lié en rotation par l'une de ses extrémités, son autre extrémité étant reliée à une tringle de commande reliée à la cloison mobile de l'actionneur à dépression ;
– l'autre extrémité du bras est reliée à la tringle de commande par un axe d'articulation parallèle à l'axe de rotation du volet pour former un ensemble bielle-manivelle ;
– lorsque le dispositif d'admission est utilisé pour un moteur à plusieurs cylindres dont chacun est relié au boîtier de répartition selon l'agencement conforme à l'invention, les axes de rotation des volets mobiles sont alignés ;
– les axes de rotation sont liés en rotation entre eux par les extrémités de leurs portions faisant saillie hors de leurs conduits respectifs ; et
– les moyens de commande des volets comprennent une seule tringle reliée par le bras à l'un des axes de rotation.

D'autres caractéristiques et avantages de l'invention apparaîtront à la lecture de la description détaillée qui va suivre pour la compréhension de laquelle on se reportera aux dessins annexés dans lesquels :
– La figure 1 est un schéma illustrant le principe d'un dispositif d'admission réalisé conformément aux enseignements de l'invention ;
– la figure 2 est une vue en coupe partielle d'un mode de réalisation détaillé du dispositif schématisé à la figure 1 ;
– la figure 3 est une vue en coupe partielle selon la ligne 3-3 de la figure 2 ;
– la figure 4 est une vue d'un détail en coupe selon la ligne 4-4 de la figure 2 ;
– la figure 5 est une vue d'un détail en coupe selon la ligne 5-5 de la figure 3 ;
– la figure 6 est une vue en coupe partielle et à échelle agrandie de moyens de rattrapage du jeu angulaire entre les axes de rotation des différents volets mobiles ; et
– la figure 7 est une vue partiellement en coupe axiale d'un des joints de OLDHAM qui relient entre eux les axes de rotation des volets.

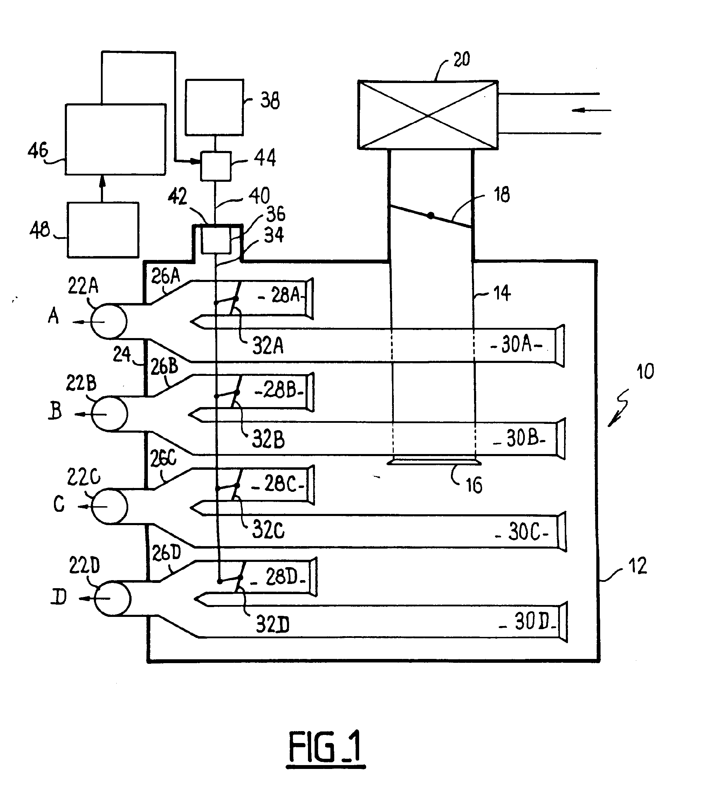

Le dispositif d'admission 10 schématisé à la figure 1 est constitué d'un boîtier 12 auquel est raccordé un tube d'entrée 14 qui s'étend à l'intérieur du boîtier 12 de façon à ce que son extrémité libre 16 débouche sensiblement au milieu de celui-ci. Un papillon 18 de commande de la charge du moteur à combustion interne est agencé dans le tube 14 en aval d'un filtre à air 20 lui-même disposé à l'extérieur du boîtier 12.

Le boîtier 12 est prévu pour permettre l'alimentation en air de quatre cylindres d'un moteur à combustion interne A à D (non représentés). Chaque cylindre est relié au boîtier de répartition 12 par un tuyau d'admission 22A à 22D.

Chacun des tuyaux d'admission traverse une paroi 24 du boîtier 12 et est relié à un raccord en Y, 26A à 26D respectivement.

Chaque raccord en Y permet à deux conduits d'admission de se rejoindre pour alimenter le tuyau d'admission correspondant.

Chaque paire de conduits d'admission reliés par un raccord en Y comporte un conduit court, 28A à 28D respectivement et un conduit long, 30A à 30D respectivement. Comme on peut le constater à la figure 1, tous les conduits d'admission s'étendent entièrement à l'intérieur du boîtier de répartition 12 et sont agencés régulièrement à l'intérieur de celui-ci de façon à procurer la répartition la plus homogène possible de l'air pénétrant par le tube 14 en direction des tuyaux d'admission 22A à 22D.

Dans chacun des conduits d'admission courts 28A à 28D est prévu un volet d'obturation, respectivement 32A à 32D.

Les volets d'obturation sont montés pivotants et leur ouverture, ou leur fermeture, peut être commandée simultanément au moyen d'une tringle de commande unique 34 qui est reliée à un actionneur à dépression 36 agencé à l'intérieur du boîtier.

La chambre de commande (non représentée) de l'actionneur à dépression 36 est reliée à une source de dépression 38 par une conduite de dépression 40 qui traverse une paroi 42 du boîtier 12 et dans laquelle est agencée une électrovanne de commande 44.

L'électrovanne de commande 44 peut par exemple être commandée par un calculateur 46 auquel sont fournies des informations relatives au régime du moteur par exemple par un capteur 48.

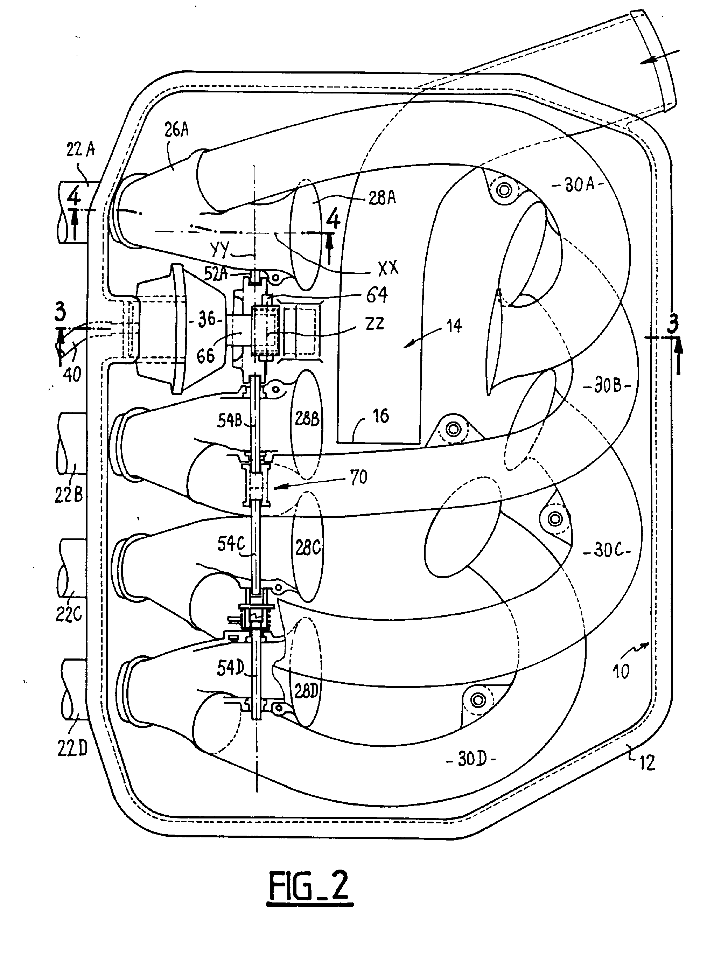

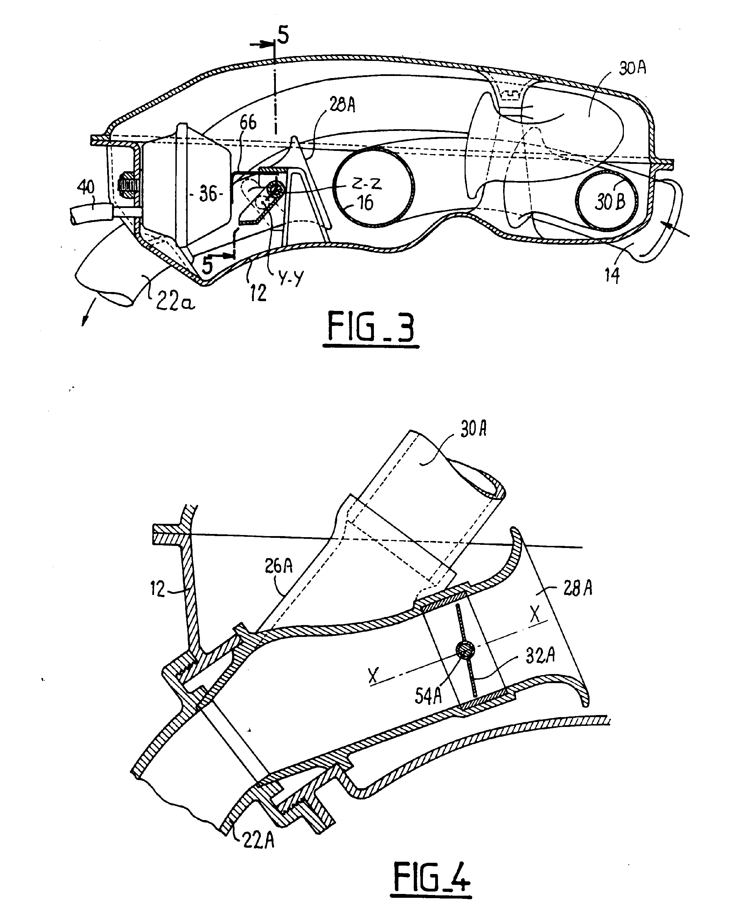

On décrira maintenant le mode de réalisation de l'invention représenté aux figures 2 à 7.

Afin de simplifier l'exposé, on ne décrira en détail que les caractéristiques relatives aux moyens d'obturation commandés, et les caractéristiques de détail de réalisation de la paire de conduits d'admission du cylindre A.

Dans une portion sensiblement rectiligne 50 du conduit court 28A d'axe X-X, est disposé un volet mobile d'obturation 32A qui est monté pivotant autour d'un axe de rotation et de commande 54A de direction Y-Y perpendiculaire à l'axe X-X.

Une extrémité libre 52A de l'axe de rotation 54A fait saillie hors de la paroi du conduit d'admission court 28A.

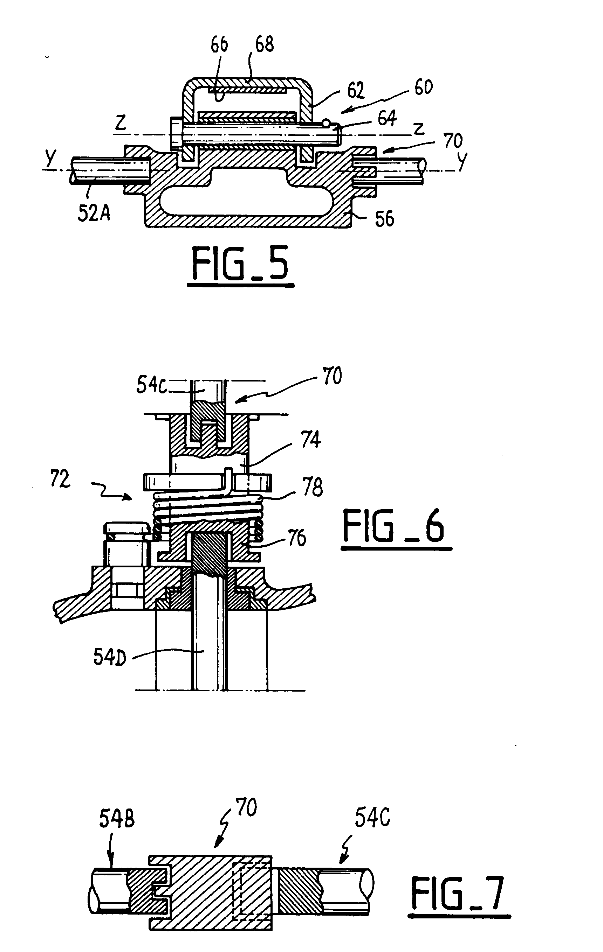

Comme on peut le constater à la figure 5, l'extrémité libre 52A est liée en rotation à la portion inférieure 56 d'un bras de commande 60. La portion supérieure 62 du bras de commande 60 est reliée à une tringle plate 66 au moyen d'un montage en chape autour d'un axe 64 de direction Z-Z parallèle à la direction Y-Y de façon à constituer un ensemble bielle-manivelle dont l'actionnement est commandé par la tringle plate 66 fixée à la face supérieure 68 de la partie en forme de chape reliée à la portion supérieure 62 du bras 60.

La tringle 66 est reliée à la cloison mobile (non représentée) formant piston de l'actionneur à dépression 36. La tringle 66 joue donc le même rôle que la tringle 34 schématisée à la figure 1.

On comprend donc aisément que, selon que la chambre de commande (non représentée) de l'actionneur à dépression 36 est mise ou non en communication avec la source de dépression par la conduite 40, la tringle 66 provoque le pivotement du bras 60 autour de l'axe Y-Y et entraîne donc en rotation l'extrémité libre 52A de l'axe de rotation et de commande 54A du volet 32A. Ce pivotement est limité par mise en butée de l'extrémité inférieure 57 du bras 60 contre une cloison interne 13 du boîtier 12.

Pour entraîner simultanément en rotation les volets agencés dans les trois autres conduits courts 28B à 28C, il est prévu que les axes de rotation de ces volets sont tous alignés et reliés entre eux, par leurs extrémités faisant à chaque fois saillie de part et d'autre de la paroi du conduit court correspondant, au moyen de dispositifs de raccordement constitués par des joints de OLDHAM 70. Les joints de OLDHAM 70 permettent de rattraper les éventuels défauts d'alignement géométrique des différents axes d'articulation et de commande. Un exemple de joint 70 est représenté à la figure 7, ainsi qu'à la figure 5 où l'on voit que les extrémités du bras 60 constituent un tel joint.

On a représenté à la figure 6 un joint de raccordement 72 particulier qui est ici prévu entre les axes de rotation 54C et 54D des volets d'obturation équipant les conduits courts 28C et 28D.

Outre une structure de OLDHAM classique 70, le joint comporte un dispositif de rattrapage de jeu angulaire autour de l'axe de rotation Y-Y au moyen d'un ressort 78 enroulé sur la pièce de jonction 74 du type OLDHAM, une extrémité libre du ressort coopérant avec une collerette 75 de cette pièce de jonction de manière à la solliciter en rotation.

Le dispositif d'admission qui vient d'être décrit s'applique aussi bien à des moteurs à combustion interne à allumage commandé ou à allumage par compression, suralimentés ou non, de nombre de cylindres quelconque et comportant une ou plusieurs soupapes d'admission par cylindre.

Le dispositif d'admission proposé comporte un boîtier de répartition de volume important qui constitue une grande capacité de détente acoustique.

On a proposé un système de sélection de l'admission dans lequel les volets de commande sont agencés dans les conduits courts, d'autres volets pouvant être agencés dans les conduits longs, également actionnés par des moyens tels que ceux décrits.

La conception selon l'invention se prête aisément à une réalisation entièrement en matière plastique du boîtier de répartition et des conduits, tuyaux et tubes.

**Revendications**

1. Dispositif d'admission (10) pour un moteur à combustion interne du type comportant un boîtier de répartition (12) auquel sont raccordés un tube d'entrée (14) et au moins une paire de conduits tubulaires d'aspiration (28A, 30A) se rejoignant en un raccord en Y (26A) pour alimenter un tuyau d'admission (22A) relié à un cylindre (A) du moteur, et des moyens d'obturation commandés (32A, 34, 36, 40, 44) d'au moins un des deux conduits, caractérisé en ce que les conduits d'aspiration (28A, 30A) et leur raccord (26A) s'étendent entièrement dans le boîtier (12) duquel ledit tuyau (22A) fait saillie vers l'extérieur à travers la paroi (24) en direction du cylindre et dans lequel sont agencés les organes mobiles (32A) d'obturation et au moins une partie (34, 36) de leurs moyens de commande.

2. Dispositif d'admission selon la revendication 1, caractérisé en ce que la paire de conduits tubulaires d'aspiration (28A, 30A) comprend un conduit long (30A) et un conduit court (28A), les organes mobiles d'obturation comportant un volet mobile d'obturation (32A) monté pivotant autour d'un axe de rotation (54A) dans le conduit court (28A).

3. Dispositif d'admission selon la revendication 2, caractérisé en ce que lesdits moyens de commande agencés dans le boîtier de répartition comportent un actionneur à dépression (36) dont la cloison mobile formant piston est reliée au moyen d'une tringlerie audit axe de rotation, la chambre de commande de l'actionneur étant reliée à une source de dépression (38) au moyen d'une conduite (40) qui traverse la paroi du boîtier (12).

4. Dispositif d'admission selon la revendication 3, caractérisé en ce que ledit volet mobile (32A) possède une section sensiblement égale à celle de la portion (50) du conduit court (28A) dans laquelle il est monté pivotant autour d'un axe de rotation (Y-Y) , sensiblement perpendiculaire à l'axe (X-X) de ladite portion, et qui fait saillie hors du conduit pour être relié à la tringlerie de commande.

5. Dispositif d'admission selon la revendication 4, caractérisé en ce que la tringlerie de commande comporte un bras (60) qui s'étend perpendiculairement à l'axe de rotation (Y-Y) auquel il est lié en rotation par l'une (56) de ses extrémités, son autre extrémité (62) étant reliée à une tringle de commande (66) reliée à la cloison mobile de l'actionneur à dépression (36).

6. Dispositif d'admission selon la revendication 5, caractérisé en ce que ladite autre extrémité est reliée à la tringle de commande par un axe d'articulation (Z-Z) parallèle audit axe de rotation (Y-Y) pour former un ensemble bielle-manivelle.

7. Dispositif d'admission pour un moteur à plusieurs cylindres dont chacun est relié au boîtier de répartion selon l'agencement conforme à l'une quelconque des revendications précédentes.

8. Dispositif d'admission selon la revendication 7 prise en combinaison avec l'une quelconque des revendications 2 à 6, caractérisé en ce que les axes de rotation (54A, 54B, 54C, 54D) desdits volets mobiles sont alignés.

9. Dispositif d'admission selon la revendication 8 prise en combinaison avec l'une quelconque des revendications 4 à 6, caractérisé en ce que lesdits axes de rotation sont liés en rotation entre eux par les extrémités libres de leurs portions faisant saillie hors de leurs conduits respectifs.

10. Dispositif d'admission selon la revendication 9 prise en combinaison avec l'une quelconque des revendications 5 ou 6, caractérisé en ce que lesdits moyens de commande comprennent une seule tringle (66) reliée par ledit bras (60) à l'un (54A) desdits axes de rotation.

**Patentansprüche**

1. Einlaßvorrichtung (10) für eine Brennkraftmaschine mit einem Verteilungsgehäuse (12), an das ein Eingangsrohr (14) und mindestens ein Paar von rohrförmigen Saugleitungen (28A, 30A) angeschlossen sind, die sich in einem Y-förmigen Verbindungsstück (26A) vereinigen, um ein mit einem Zylinder (A) des Motors verbundenes Einlaßrohr (22A) zu speisen, und gesteuerten Absperreinrichtungen (32A, 34, 36, 40, 44) für mindestens eine der beiden Leitungen, dadurch gekennzeichnet, daß die Saugleitungen (28A, 30A) und ihr Verbindungsstück (26A) sich vollständig in dem Gehäuse (12) erstrecken, aus dem das Rohr (22A) nach außen durch die Wand (24) hindurch in Richtung auf den Zylinder hervorsteht und in dem die beweglichen Absperrorgane (32A) und mindestens ein Teil (34, 36) ihrer Steuereinrichtungen angeordnet sind.

2. Einlaßvorrichtung nach Anspruch 1, dadurch gekennzeichnet, daß das Paar von rohrförmigen Saugleitungen (28A, 30A) aus einer langen Leitung (30A) und einer kurzen Leitung (28A) besteht, wobei die beweglichen Absperrorgane aus einer beweglichen Absperrklappe (32A) bestehen, die um eine Drehachse (54A) schwenkbar in der kurzen Leitung (28A) montiert ist.

3. Einlaßvorrichtung nach Anspruch 2, dadurch gekennzeichnet, daß die in dem Verteilungsgehäuse angeordneten Steuereinrichtungen aus einem Unterdruck-Betätigungsorgan (36) bestehen, dessen einen Kolben bildende bewegliche Trennwand durch ein Gestänge mit der Drehachse verbunden ist, wobei die Steuerkammer des Betätigungsorgans mit einer Unterdruckquelle (38) durch eine Leitung (40) verbunden ist, die die Wand des Gehäuses (12) durchquert.

4. Einlaßvorrichtung nach Anspruch 3, dadurch gekennzeichnet, daß die bewegliche Klappe (32A) einen querschnitt besitzt, der im wesentlichen gleich dem des Abschnitts (50) der kurzen Leitung (28A) ist, in dem sie um eine Drehachse (Y-Y) schwenkbar montiert ist, die zur Achse (X-X) dieses Abschnitts im wesentlichen senkrecht ist und aus der Leitung herausragt, um mit dem Steuergestänge verbunden zu werden.

5. Einlaßvorrichtung nach Anspruch 4, dadurch gekennzeichnet, daß das Steuergestänge einen Arm (60) besitzt, der sich senkrecht zur Drehachse (Y-Y) erstreckt, mit der er bezüglich Drehung über eines (56) seiner Enden verbunden ist, wobei sein anderes Ende (62) mit einer Steuerstange (66) verbunden ist, die mit der beweglichen Trennwand des Unterdruckbetätigungsorgans (36) verbunden ist.

6. Einlaßvorrichtung nach Anspruch 5, dadurch gekennzeichnet, daß das andere Ende mit der Steuerstange durch eine zur Drehachse (Y-Y) parallele Gelenkachse (Z-Z) verbunden ist, um eine Pleuel-Kurbel-Einheit zu bilden.

7. Einlaßvorrichtung für einen Motor mit mehreren Zylindern, deren jeder mit dem Verteilungsgehäuse gemäß der Anordnung gemäß einem der vorhergehenden Ansprüche verbunden ist.

8. Einlaßvorrichtung nach Anspruch 7 in Verbindung mit einem der Ansprüche 2 bis 6, dadurch gekennzeichnet, daß die Drehachsen (54A, 54B, 54C, 54D) der beweglichen Klappen in. einer Linie liegen.

9. Einlaßvorrichtung nach Anspruch 8 in Verbindung mit einem der Ansprüche 4 bis 6, dadurch gekennzeichnet, daß die Drehachsen bezüglich Drehung miteinander über die freien Enden ihrer aus ihren jeweiligen Leitungen herausragenden Abschnitte verbunden sind.

10. Einlaßvorrichtung nach Anspruch 9 in Verbindung mit einem der Ansprüche 5 oder 6, dadurch gekennzeichnet, daß die Steuereinrichtungen eine einzige Stange (66) aufweisen, die durch den Arm (60) mit einer (54A) der Drehachsen verbunden ist.

**Claims**

1. Intake device (10) for an internal combustion engine, of the type comprising a distribution housing (12), to which are connected an inlet tune (14) and at least one pair of tubular suction conduits (28A, 30A) meeting at a Y-union (26A) in order to feed an intake pipe (22A) connected to a cylinder (A) of the engine, and controlled means 32A, 34, 36, 40, 44) for shutting off at least one of the two conduits, characterised in that the suction conduits (28A, 30A) at their union (26A) extend entirely within the housing (12), from which said pipe (22A) projects outwards through the wall (24) in the direction of the cylinder and in which are arranged the movable shut-off members (32A) and at least part (34, 36) of their control means.

2. Intake device according to Claim 1, characterised in that the pair of tubular suction conduits (28A, 30A) comprises a long conduit (30A) and a short conduit (28A), the movable shut-off members comprising a movable shut-off flap (32A) mounted pivotably about a rotary axle (54A) in the short conduit (28A).

3. Intake device according to Claim 2, characterised in that said control means arranged in the distribution housing comprise a vacuum actuator (36), of which the movable partition forming a piston is connected to said rotary axle by means of a linkage, the control chamber of the actuator being connected to a vacuum source (38) by means of a hose (40) passing through the wall of the housing (12).

4. Intake device according to Claim 3, characterised in that said movable flap (32A) has a cross-section. substantially equal to that of the portion (50) of the short conduit (28A) in which it is mounted pivotably about a rotary axle of axis (Y-Y) which is substantially perpendicular to the axis (X-X) of said portion and which projects from the conduit in order to be connected to the control linkage.

5. Intake device according to Claim 4, characterised in that the control linkage comprise an arm (60) which extends perpendicularly to the rotary axle of axis (Y-Y), to which it is connected in terms of rotation by means of one (56) of its ends, its other end (62) being connected to a control rod (66) connected to the movable partition of the vacuum actuator (36).

6. Intake device according to Claim 5, characterised in that said other end is connected to the control rod by means of a pivot axle of axis (Z-Z) parallel to said rotary axle of axis (Y-Y), to form a connecting-rod/crank assembly.

7. Intake device for an engine with a plurality of cylinders, each of which is connected to the distribution housing in the arrangement according to any one of the preceding claims.

8. Intake device according to Claim 7, taken in combination with any one of Claims 2 to 6, characterised in that the rotary axles (54A, 54B, 54C, 54D) of said movable flaps are aligned.

9. Intake device according to Claim 8, taken in combination with any one of Claims 4 to 6, characterised in that said rotary axles are connected in terms of rotation to one another by means of the free ends of their portions projecting from their respective conduits.

10. Intake device according to Claim 9, taken in combination with either one of Claims 5 and 6, characterised in that in that said control means comprise a single rod (66) connected by means of said arm (60) to one (54A) of said rotary axles.

FIG.1

FIG_2

FIG_3

FIG_4

FIG_5

FIG_6

FIG_7